# EUROPÄISCHE PATENTSCHRIFT

(11) **EP 3 198 232 B1**
(45) Veröffentlichungstag und Bekanntmachung des Hinweises auf die Patenterteilung: **09.01.2019**
(21) Anmeldenummer: 15770867.8
(22) Anmeldetag: 24.09.2015
(51) Int. Cl.: G01D 5/14, G01D 11/24

(54) **INTEGRIERTE WELLENLAGERUNG FÜR EINEN SENSOR**
INTEGRATED SHAFT BEARING FOR A SENSOR
PALIER D'ARBRE INTÉGRÉ POUR UN CAPTEUR

(30) Priorität: 25.09.2014 DE 102014219390
(43) Veröffentlichungstag der Anmeldung: 02.08.2017
(73) Patentinhaber: Continental Teves AG & Co. OHG, 60488 Frankfurt am Main (DE)
(72) Erfinder: KOTLAJA, Aleksandar, 60327 Frankfurt am Main (DE); KROHN, Thomas, 65824 Schwalbach (DE); RISCH, Stephan, 64331 Weiterstadt (DE)
(86) Internationale Anmeldenummer: PCT/EP2015/072035
(87) Internationale Veröffentlichungsnummer: WO 2016/046341

(56) Entgegenhaltungen:
- EP-A2- 1 729 093
- WO-A1-2014/005964
- DE-B3-102011 118 775
- DE-C1- 19 733 719

## Beschreibung

Die Erfindung betrifft einen Sensorvorrichtung zum erfassen einer Rotation gemäß dem Oberbegriff des Hauptanspruchs.

Aus der DE 10 2007 034 099 A1 ist ein Höhenstandsensor bekannt. Der in dieser Druckschrift gezeigte Höhenstandsensor weißt einen Hebelarm auf, der an einem ersten Ende mit einem sich bewegenden Element verbunden ist. An dem anderen Ende ist der Hebelarm mit einer Welle verbunden, wobei die Welle ein signalgebendes Element aufweist, so dass über die Bewegung der Welle die Rotation des Hebelarms ermittelbar ist. Die Welle ist innerhalb eines Gehäuses angebracht. Die Welle 14 weist an ihrem dem Hebelarm abgewandten Ende umfangsseitig einen rotationssymmetrischen Kragen mit einer Schulter auf. Der Kragen befindet sich in einem entsprechenden Kragenaufnahmebereich des Lagerraums, dessen Durchmesser größer ist als der Durchmesser des restlichen Lagerraums. Die in dieser Druckschrift gezeigte Lösung hat den Nachteil, dass die Welle nicht einstückig mit dem Hebelelement ausgebildet werden kann. In der DE 10 2011 118 775 B3 ist ein ähnlicher Höhenstandsensor gezeigt, wobei die Welle zur Lagerung derselben einen kugelkalottenförmigen Abschnitt aufweist. Mittels des kugelkalottenförmigen Abschnitts ist es zwar möglich die Welle in das Gehäuseteil einzuschieben und es in diesen einzurasten. Die passgenaue Herstellung des kugelkalottenförmigen Abschnitts ist jedoch relativ aufwändig.

Aus der WO2014/005964 ist eine weitere Sensorvorrichtung bekannt, wobei ein Positionsgeber in einem Gehäuse gelagert ist.

Aufgabe der Erfindung ist es daher einen Sensorvorrichtung mit einem einfach herstellbaren Wellenelement aufzuzeigen, das mit geringem Aufwand in ein Gehäuse der Sensorvorrichtung einbaubar ist.

Die Aufgabe wird gelöst mittels einer Sensorvorrichtung der eingangs genannten Art, die durch die kennzeichnenden Merkmale des Anspruchs 1 weitergebildet wird. Weitere vorteilhafte Ausführungsformen sind Gegenstand der Unteransprüche und werden hiermit durch Bezugnahme ausdrücklich zum Gegenstand der Beschreibung gemacht.

Die Erfindung basiert auf den Grundgedanken mittels des sich zum Wellenende hin verjüngenden Abschnitts eine einfache Herstellbarkeit einer radialen und axialen Lagerung des Wellenelements des Positionsgebers zu erreichen. Die Verjüngung des Lagerabschnitts kann mittels eines sich kontinuierlich verjüngenden oder kegelförmig geformten Abschnitts realisiert werden. Es ist jedoch auch denkbar, die Verjüngung stufenweise zu realisieren. Letztere Variante kann beispielsweise mittels einer Sacklochbohrung realisiert werden. In jedem Fall liegt das Wellenelement so an dem Gehäuseteil im Bereich des Lagerabschnitts an, so dass das Wellenelement zum einen in radialer Richtung als auch in eine axiale Richtung abgestützt wird. Im Falle der stufenweisen Ausgestaltung des Lagerabschnitts ergibt sich mindestens eine quer zur Längsachse der Welle ausgerichtete Kontaktfläche und eine daran anschließende radial um die Längsachse laufende Kontaktfläche zwischen dem Wellenelement und dem Gehäuseteil.

Die Anordnung des sich verjüngenden Abschnitts am zweiten Wellenende, wo auch ein Magnetelement als Signalgeber angeordnet ist, hat den Vorteil, dass dieser lagesensitive Bereich unmittelbar gelagert wird und dadurch positionstreu bleibt. Dadurch kann bereits mit einem Lagerabschnitt eine ausreichende Positionstreue des Wellenelements sichergestellt werden. Durch die sich zum Wellenende verjüngende Form kann das Wellenelement des Weiteren von außen bzw. von oben in das Innere des Gehäuseteils eingeschoben werden, so dass es möglich ist das Wellenelement einstückig mit dem Hebelelement auszubilden und zugleich mit einem Schritt innerhalb des Gehäuseteils zu montieren, wobei weitere Justierungsschritte hiervon nicht berücksichtigt sind. Dieser Aufbau vereinfacht zudem die Trennung der zwei Abschnitte des Gehäuseteils und damit auch die Trennung des Sensorelements vor äußeren Einflüssen, die innerhalb des ersten Abschnitts des Gehäuseteils vorliegen können. Der Begriff Lagerabschnitt wird im Sinne der Erfindung dafür verwendet, um einen Abschnitt oder Bereich zu beschreiben, in der das Wellenelement bzw. Gehäuseteils in erfindungsgemäßer Weise geformt sind, um eine Lagerung des Wellenelements am Gehäuseteil zu erreichen. Daher sind die Lagerabschnitte am Wellenelement und am Gehäuseteil so zueinander ausgerichtet, dass sie miteinander in Kontakt stehen. Durch den unmittelbaren Kontakt zwischen dem Gehäuseteil und dem Wellenelement im Bereich des Lagerabschnitts kommt es zwischen den beiden Teilen bei einer Rotation des Wellenelements zu Reibungen. Diese Reibungen sind jedoch für viele Anwendungsfälle in gewisser Höhe hinnehmbar. Um jedoch zu hohe Reibungen zwischen dem Gehäuseteil und dem Wellenelement zu vermeiden besteht außerhalb des Lagerabschnitts kein Kontakt zwischen den beiden teilen. Es besteht also zwischen dem Wellenelement und dem Gehäuseteil außerhalb des Lagerabschnitts ein Luftspalt. Auf dieser Weise können die Lagerabschnitte auch derart zueinander ausgerichtet werden, um die Reibungshöhe bzw. -intensität durch Herstellungsmaßnahmen oder Konstruktionsmaßnahmen in gewünschter einzustellen.

Das Gehäuseteil ist erfindungsgemäß als ein vom Gehäuse der Sensorvorrichtung separates Teil ausgebildet, das durch Umspritzen mit dem Gehäuse verbunden werden kann bzw. in das Gehäuse integriert werden kann. Alternativ stellt das Gehäuseteil einen Bereich bzw. Abschnitt eines einstückig ausgebildeten Gehäuses dar. Der erste und zweite Abschnitt des Gehäuseteils sind erfindungsgemäß derart voneinander getrennt, so dass ein Durchfluss von Feuchtigkeit durch Wasser, Öl oder vergleichbaren Medien von einem zum anderen Abschnitt nicht möglich ist, bspw. um das Sensorelement davor zu schützen. Die erfindungsgemäße Sensorvorrichtung wird dadurch in vorteilhafter Weise weitergebildet, dass der erste Lagerabschnitt stufenweise verjüngend geformt ist. Die stufenweise Ausführung des Lagerabschnitts hat den Vorteil der leichten Herstellbarkeit. Ferner hat diese Ausführungsform den Vorteil, dass der Bereich zum zweiten Wellenende hin mittels der Kontaktflächen zwischen dem Wellenelement und dem Gehäuseteil abgedichtet werden kann. Der Bereich zwischen dem Magnetelement und dem Gehäuse kann auf diese Weise wirksam gegen Schmutz und Feuchtigkeit geschützt werden, die möglicherweise die Wirkung des Sensorelements beeinträchtigen könnten. Ferner ermöglicht die stufenweise Ausführung des Lagerabschnitts den axialen Abstand zwischen dem Magnetelement und dem Sensorelement möglichst genau einzustellen.

Die erfindungsgemäße Sensorvorrichtung wird dadurch in vorteilhafter Weise weitergebildet, dass der erste Lagerabschnitt jeweils eine im Wesentlichen horizontal und eine im Wesentlichen vertikal verlaufende Kontaktfläche aufweist, die unmittelbar aneinander angrenzen. Mittels der im Wesentlichen orthogonal zueinander ausgerichteten Kontaktflächen ist die Lagerung des Wellenelements besonders einfach erreichbar.

Die erfindungsgemäße Sensorvorrichtung wird dadurch in vorteilhafter Weise weitergebildet, dass das Gehäuseteil und das Wellenelement im Bereich des ersten Lagerabschnitts passgenau hergestellt ist. Durch die Passgenauigkeit werden eine hohe Positionstreue und eine gute Abdichtung des Bereiches des zweiten Wellenendes erreicht.

Die erfindungsgemäße Sensorvorrichtung wird dadurch in vorteilhafter Weise weitergebildet, dass die Position der horizontalen Kontaktflächen passgenau gefertigt ist. Auf diese Weise kann der axiale Abstand zwischen dem Magnetelement und dem Sensorelement besonders genau eingestellt werden. Passgenau soll in diesem Zusammenhang daher bedeuten, dass der Toleranzbereich zu Herstellung oder Bearbeitung des betroffenen Bereichs bzw. Abschnitts zu anderen Bereichen signifikant kleiner ist, um eine höhere Genauigkeit der Maße und relativen Position zu erreichen.

Die erfindungsgemäße Sensorvorrichtung wird dadurch in vorteilhafter Weise weitergebildet, dass das zweite Wellenende nicht in Berührung mit dem Gehäuseteil steht. Zwar erhöht sich dadurch der Abstand zwischen dem Magnetelement und dem Sensorelement. Durch einen geringen Luftabstand zwischen dem Gehäuseteil und dem zweiten Wellenende wird jedoch die Reibung bei Rotation des Wellenelements vermieden, was insgesamt eine flüssigere Rotation des Wellenelements ermöglicht.

Die erfindungsgemäße Sensorvorrichtung wird dadurch in vorteilhafter Weise weitergebildet, dass das Gehäuseteil und das Wellenelement zwischen dem ersten Wellende und dem ersten Lagerabschnitt jeweils einen zweiten Lagerabschnitt zur radialen Lagerung des Wellenelements aufweist. Das Wellenelement wird gemäß dieser Ausführungsform lediglich durch die beiden Lagerabschnitte gelagert und steht auch nur im Bereich der Lagerabschnitte mit dem Gehäuseteil im Kontakt. Durch die weitere radiale Lagerung am zweiten Lagerabschnitt wird ein Kippen des Wellenelements um die Längsachse wirksam verhindert. Auf diese Weise ist es möglich das Wellenelement besonders positionstreu relativ zum Gehäuseteil und somit auch zum Sensorelement zu halten. Das Wellenelement und das Gehäuseteil sind vorteilhafterweise im Bereich des zweiten Lagerabschnitts passgenau zueinander ausgearbeitet. Weitere radiale Lagerungsabschnitte sind zwar auch denkbar, jedoch bietet die Kombination aus den ersten und zweiten Lagerungsabschnitten die ideale Lösung zur kostengünstigen und sicheren Lagerung des Wellenelements.

Die erfindungsgemäße Sensorvorrichtung wird dadurch in vorteilhafter Weise weitergebildet, dass das Wellenelement im zweiten Lagerabschnitt ein Vorsprung mit einer im Wesentlichen parallel zur Längsachse des Wellenelements verlaufenden Kontaktfläche zum Gehäuseteil ausgebildet ist. Auf diese Weise ist die Lagerung am zweiten Lagerabschnitt besonders einfach realisierbar.

Die erfindungsgemäße Sensorvorrichtung wird dadurch in vorteilhafter Weise weitergebildet, dass die Oberfläche des Gehäuseteils oder Wellenelements zumindest im Bereich eines Lagerabschnitts ein Gleitmittel aufweist. Auf diese Weise kann die Reibung zwischen dem Wellenelement und dem Gehäuseteil wirksam verringert werden. Beispielsweise könnte die Kontaktfläche am Wellenelement oder am Gehäuseteil mit einer auf die Oberfläche aufgebrachten Schmierschicht, z. B. PTFE, ausgestattet sein. Es ist jedoch auch denkbar das Wellenelement oder das Gehäuseteil selbst zumindest im Bereich eines Lagerabschnitts mittels eines möglichst reibungsarmen Materials auszubilden.

Die erfindungsgemäße Sensorvorrichtung wird dadurch in vorteilhafter Weise weitergebildet, dass das Gehäuseteil im Bereich mindestens eines Lagerabschnitts segmentförmig ausgebildete Kontaktflächen aufweist, wobei die Kontaktflächen mittels Nuten oder Ausnehmungen voneinander getrennt sind. Durch die segmentartigen bzw. segmentförmig ausgebildeten Kontaktflächen wird die Lagerung des Wellenelements am Gehäuseteil weiterhin sichergestellt. Mittels der Freiräume zwischen den Kontaktflächen verringert sich insgesamt die Größe der Gesamtkontaktfläche, so dass die Reibung zwischen dem Wellenelement und dem Gehäuseteil verringert wird. Des Weiteren haben die Freiräume bzw. Nuten den Vorteil, dass Schmutzpartikel oder dergleichen sich nicht im Bereich der Kontaktflächen ablagern, sondern durch Rotation des Wellenelements in die Nuten befördert werden. Die zwischen den Kontaktflächen angeordneten Nutten können auch als Speicher für Schmiermittel verwendet werden.

Die erfindungsgemäße Sensorvorrichtung wird dadurch in vorteilhafter Weise weitergebildet, dass die Nuten oder Ausnehmungen zum Aufnehmen eines Schmiermittels vorgesehen sind. Die Lagerabschnitte werden vor Montage des Wellenelements in das Gehäuseteil mit einem Schmiermittel versehen. Durch die Nuten kann eine größere Menge von Schmiermittel in die Lageabschnitte eingebracht werden.

Die erfindungsgemäße Sensorvorrichtung wird dadurch in vorteilhafter Weise weitergebildet, dass die Passung im Bereich des Lagerabschnitts derart gestaltet ist, den Bereich des zweiten Wellenendes abzudichten.

Die erfindungsgemäße Sensorvorrichtung wird dadurch in vorteilhafter Weise weitergebildet, dass das Sensorelement einen Chip aufweist, wobei das Gehäuseteil im ersten Abschnitt eine Ausnehmung zum Aufnehmen des Chips oder eines elektronischen Bauteils zum Erfassen des Magnetfeldes des Magnetlements aufweist, wobei die Position der Ausnehmung präzise zur Position des Wellenelements ausgerichtet ist. Auf diese Weise wird sichergestellt, dass auch das Sensorelement über die gesamte Lebensdauer der Sensorvorrichtung die relative Position zum Magnetelement beibehält.

Die erfindungsgemäße Sensorvorrichtung wird dadurch in vorteilhafter Weise weitergebildet, dass der Positionsgeber ein Hebelelement aufweist, das am ersten Wellenende angeordnet ist und mit dem Wellenelement einstückig ausgebildet ist, wobei im Bereich zwischen dem Wellenelement und dem Hebelelement eine Ausnehmung ausgebildet ist, worüber der Positionsgeber in das Gehäuseteil einrastbar ist. Auf diese Weise kann der Positionsgeber besonders aufwandsarm montiert werden. Das Einrasten des Positionsgebers am Gehäuseteil im Verbindungsbereich zwischen dem Hebelelement und dem Wellenelement hat des Weiteren den Vorteil, dass das Eindringen von Schmutz und Feuchtigkeit in das Gehäuseteil teilweise verhindert werden kann. Je nach Anwendungsfall kann dieser Bereich auch mit einer zusätzlichen Dichtung versehen werden.

Die Erfindung umfasst ferner den Aspekt die erfindungsgemäße Sensorvorrichtung als Höhenstandsensor zu verwenden. Die vorgenannten Ausführungsformen sind insbesondere für den Einsatz in einem Höhenstandsensor besonders gut geeignet, da hier die Rotationsgeschwindigkeiten und Rotationshübe relativ gering sind und somit eine Kontaktlagerung zwischen dem Wellenelement und dem Gehäuseteil auch über eine längere Lebensdauer haltbar sind.

Die Erfindung wird nachfolgend anhand von Figuren und eines Ausführungsbeispiels näher beschrieben. Es zeigen:
Figur 1 eine perspektivische Teilschnittansicht eines ersten Ausführungsbeispiels der erfindungsgemäßen Sensorvorrichtung,
Figur 2 eine perspektivische Teilschnittansicht auf Teile der Sensorvorrichtung,
Figur 3 eine Schnittansicht auf einen Teilbereich der in Figur 2 gezeigten Teile,
Figur 4 eine perspektivische Ansicht auf die Unterseite des Gehäuseteils mit einem Sensorelement,
Figur 5 eine perspektivische Teilschnittansicht auf das Gehäuseteil des zweiten Ausführungsbeispiels, und
Figur 6 eine Querschnittansicht des Gehäuseteils aus Figur 5.

Der Übersichtshalber wurden in einigen Figuren einige Bezugszeichen ausgelassen. Diese fehlenden Bezugszeichen sind aus den anderen Figuren ergänzend hinzuzudenken. Die Beschreibung ist daher auch auf die teilweise ohne Bezugszeichen versehenen Elemente ebenso anwendbar.

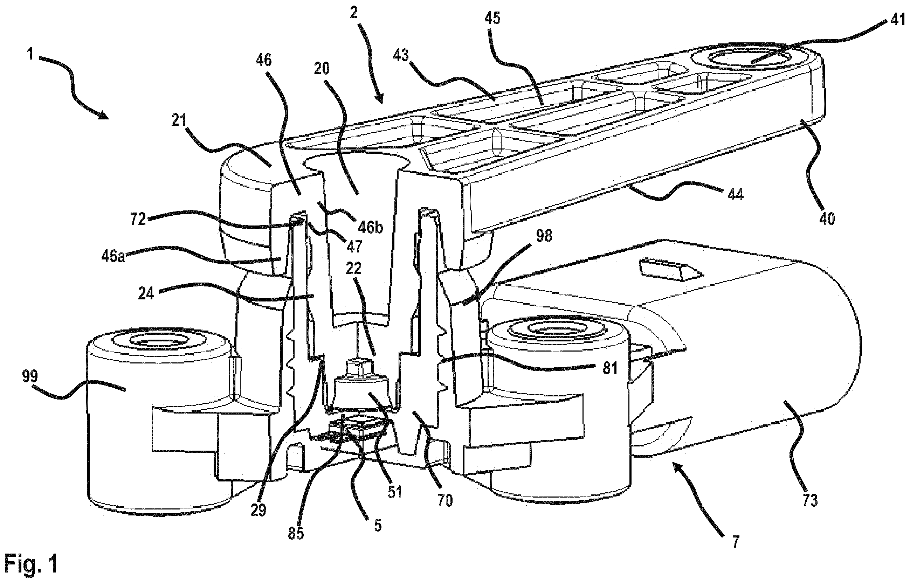

Figur 1 zeigt eine Sensorvorrichtung 1 zum Erfassen einer Rotation mit einem Positionsgeber 2, einem Sensorelement 5 und einem in einem Gehäuse 7 integriertes Gehäuseteil 70. Die Sensorvorrichtung 1 wird als Höhenstandsensor verwendet, insbesondere zum Ermitteln der Höhe einer Kraftfahrzeugskarosserie.

Hierzu ist die Sensorvorrichtung 1 mit einer Höhenverstellungsvorrichtung des Kraftfahrzeugs verbunden, bspw. einem Federbein. Wenn die Höhe der Fahrzeugs-Karosserie verstellt wird, kann die Höhe der Verstellung mittels der Sensorvorrichtung 1 ermittelt werden. Bei diesem Anwendungsfall ist die Sensorvorrichtung Schmutz und Wasser ausgesetzt, da es im Bereich der Räder angeordnet ist. Daher ist es notwendig die funktionswesentlichen Teile der Sensorvorrichtung 1 vor den äußeren Einflüssen zu schützen. Dies betrifft insbesondere die Elektronik. Insbesondere im Hinblick auf die Langlebigkeit ist es wesentlich, dass das Innere der Sensorvorrichtung 1 im wesentlichen Trocken bleibt.

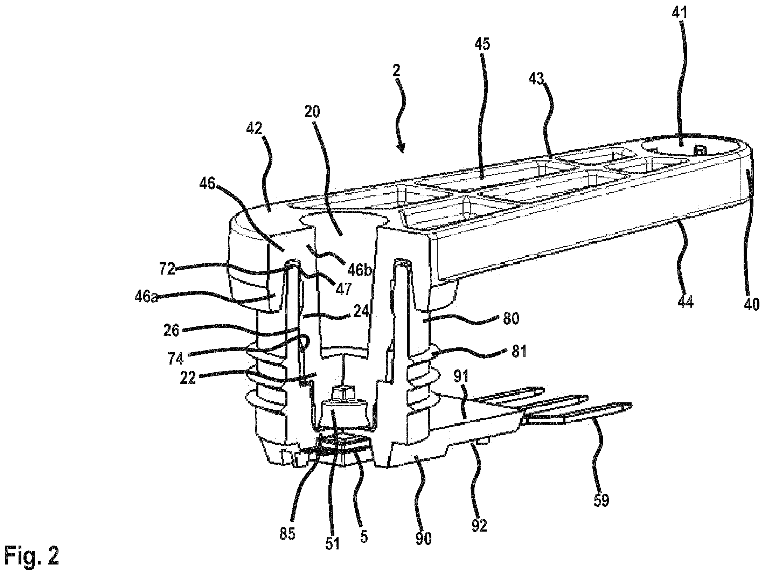

Der Positionsgeber 2 weist ein Wellenelement 20 mit einem ersten und zweiten Wellende 21, 22 auf. Der Positionsgeber 2 weist ferner ein Hebelelement 40 auf, das am ersten Wellenende 21 angeordnet ist. Das Wellenelement 20 und das Hebelelement 40 sind einstückig ausgebildet. Das Hebelelement 40 und das Wellenelement 20 sind vorzugsweise als ein Spritzgussteil gefertigt. An dem freien Ende weist das Hebelelement 40 eine Bohrung 41 (s. Figur 2) auf, über die das Wellenelement 40 mit einem sich bewegenden Element, z. B. Federbein, formschlüssig koppelbar ist. Das Wellenelement 20 ist an dem den freien Ende gegenüberliegenden Ende des Hebelelements 40 angeordnet. Auf diese Weise kann die Bewegung des sich bewegenden Elements über das Hebelelement 40 auf das Wellenelement 20 übertragen werden, woraufhin dieser sich dreht.

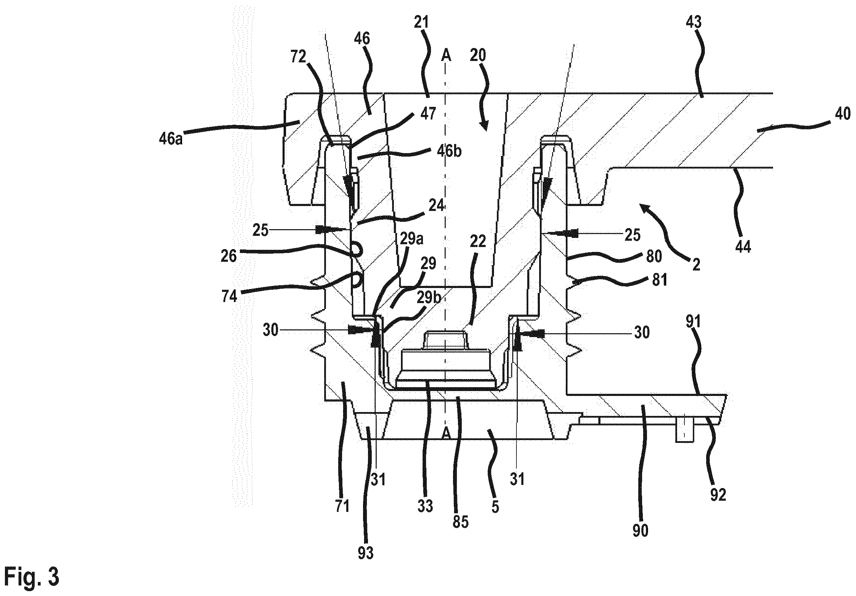

Das Hebelelement 40 ist flachstabartig ausgebildet. Die oberen und unteren Seiten 43, 44 des Wellenelements 40 sind im Wesentlichen ebenförmig ausgebildet. Die in den Figuren 1-3 gezeigte erste Ausführungsform weist mehrere Ausnehmungen 45 auf der oberen und unteren Seite 43, 44 des Hebelelements 40 auf, um eine gleichmäßige Wandstärke des Hebelelements 40 zu erreichen. Die beiden Enden des Hebelelements sind abgerundet. An dem zweiten Ende des Hebelelements ist ein Kragen 46 ausgebildet, über die das Hebelelement und das Wellenelement 20 am Gehäuseteil 70 einrastbar sind. Der Kragen 46 weist dabei eine äußere Lippe 46a und eine innere Lippe 46b auf, die über die obere Seite bzw. Oberseite 43 des Wellenelements miteinander verbunden sind und auf diese Weise einen U-förmigen Kragen bilden. Im Bereich der oberen Kante 72 des Gehäuseteils 70 weist die innere Lippe 46b einen kleinen Vorsprung 47 auf (siehe z. B. Figur 3), um das Hebelelements 40 und das Wellenelements 20 am Gehäuseteil 70 einzurasten. Das Wellenelement 20 und der Kragen 46 sind derart ausgebildet, dass das Hebelelements 40 nicht auf der oberen Kante 72 des Gehäuseteils aufsitzt, sondern ein kleiner Luftspalt zwischen den Kragen im Übergangsbereich der Lippen 46a, 46b und der Oberkante 72 des Gehäuseteils entsteht.

Das Wellenelement 20 ist senkrecht zum Hebelelement 40 ausgerichtet. Es erstreckt sich von der Unterseite 44 des Hebelelements weg, wobei der Übergang von der inneren Lippe 46b zum Wellenelement 20 fließend ist. Bei einer nicht einstückigen Ausführung des Wellenelements 20 und des Hebelelements 40 könnte die Verbindung zwischen den beiden Elementen mittels einer Steckverbindung oder dergleichen realisiert werden. Das Wellenelement 20 ist zylinderförmig bzw. leicht kegelförmig ausgebildet und weist eine sich leicht zum Wellenende 22 hin verjüngende Form auf. Der Radius des Wellenelements 20 ist derart gewählt, so dass kein Kontakt zwischen dem Wellenelement 20 und der Innenseite 74 des Gehäuseteils 70 entsteht. Stattdessen weist das Wellenelement 20 zwei Lagerabschnitte 24, 29 auf, über die das Wellenelement 20 an der Innenseite 74 des Gehäuseteils 70 anliegt und somit das Wellenelement 20, aber auch das Hebelelement 40 indirekt in radialer axialer Richtung am Gehäuseteil 70 bzw. Gehäuse 7 lagert.

Der erste Lagerabschnitt 24 ist in etwa der Mitte zwischen dem zweiten Wellenende 22 und dem Vorsprung 47 an der inneren Lippe 46b angeordnet. Der erste Lagerabschnitt 24 lagert das Wellenelement 20 in radialer Richtung, was in Figur 3 durch die Pfeile 25 dargestellt ist. Hierzu weist der erste Lagerabschnitt 24 einen von der Mantelfläche des Wellenelements 20 vorstehenden Vorsprung auf, der eine zur Innenseite 74 des Gehäuseteils 71 parallel verlaufende Kontaktfläche 26 aufweist. Zwischen der Kontaktfläche 26 und der Mantelfläche des Wellenelements 20 sind stetig verlaufende Übergangsflächen vorgesehen, um ein Verkanten oder dergleichen zu verhindern.

Der zweite Lagerabschnitt 29 ist in axialer Richtung vom ersten Lagerabschnitt 24 beabstandet angeordnet und befindet sich im Bereich des zweiten Wellenendes 22 des Wellenelements 20. Der zweite Lagerabschnitt 29 weist einen sich zum Wellenende hin verjüngend geformten Abschnitt auf. Hier liegt das Wellenelement 20 am Gehäuseteil an. Im Ausführungsbeispiel ist der zweite Lagerabschnitt als ein Wellenabsatz ausgebildet, der mit einer dazu korrespondierenden Sacklochbohrung am Gehäuseteil 71 zusammenwirkt, um das Wellenelement 20 sowohl in radialer als auch in eine axialer Richtung zu lagern, wie in Figur 3 durch die Pfeile 30, 31 dargestellt. Der sich verjüngende Abschnitt ist in diesem Ausführungsbeispiel also stufenförmig verjüngend ausgebildet. Er weist eine quer zur Längsachse des Wellenelements 20 verlaufende Fläche 29a und eine parallel zur Innenseite 74 des Gehäuseteils 71 verlaufende Fläche 29b auf, die unmittelbar aneinander angrenzen. Der Übersicht halber sind die Bezugszeichen nur in Figur 3 eingezeichnet. Die parallel zur Innenseite 74 verlaufende Fläche 29b verläuft auch im Wesentlichen parallel zur Längsachse A des Wellenelements 20. Die Flächen bzw. Kontaktflächen 29a, 29b sind im Wesentlichen orthogonal zueinander angeordnet, so dass das Wellenelement 20 einen senkrechten Absatz bildet. Denkbar ist es den Übergang zwischen den Kontaktflächen 29a, 29b mit einer kleinen Abrundung zu versehen. Es ist nicht notwendig, dass das Wellenelement 20 im Bereich des Übergangs zwischen den Kontaktflächen 29a, 29b am Gehäuseteil 70 anliegt. Wie in Figur 3 zu sehen, weist das Gehäuseteil 70 in diesem Bereich auch eine abgerundete Kante auf, der aus spritzgusstechnischen Gründen vorteilhaft ist. Es ist jedoch auch denkbar, diagonale Flächen, mehrere Stufen oder eine Kombination aus diagonalen Flächen und stufenförmigen Abschnitten vorzusehen, um eine radiale und axiale Lagerung des Wellenelements 20 zu erreichen.

Das zweite Wellenende 22 wiederum ist so ausgebildet, dass es nicht mit dem Gehäuseteil 71 in Kontakt steht. Wie in Figur 3 zu sehen, besteht zwischen dem zweiten Wellenende 22 und dem Gehäuseteil 70 ein Luftspalt, um eine Reibung zwischen dem zweiten Wellenende und Gehäuseteil 70 zu vermeiden. An dem zweiten Wellenende 22 ist auch eine Ausnehmung 33 zum Aufnehmen eines Magnetelements 51 vorgesehen. Die Ausnehmung 33 ist als mehrstufige ausgebildet, die ein Negativ der Form des Magnetelements 51 darstellt. Das Magnetelement 51 und die Ausnehmung 33 sind so ausgebildet, dass das Magnetelement 51 bündig zur Stirnfläche des Wellenelements 20 schließt.

Vorteilhafterweise ist das Wellenelement 20 im Bereich der der Lagerabschnitte 24, 29 passgenau hergestellt. Dies betrifft zum einen die Toleranz bzgl. der Position relativ zur Längsachse A des Wellenelements. Insbesondere ist es vorteilhaft die horizontale Kontaktfläche 29a in Bezug auf den Abstand zur Stirnfläche des zweiten Wellenendes 22 hin passgenau bzw. mit einer geringen Toleranz zu fertigen. Des Weiteren betrifft die Passgenauigkeit auch die radialen Abmessungen der Kontaktflächen 29b und 26 der ersten und zweiten Lagerabschnitte 24, 29, um eine feste Lagerung bei gleichzeitig geringer Reibung zu erreichen. Die Reibung kann beispielsweise auch mittels Schmiermittel, eines geeigneten Materials bzw. Materialpaares des Gehäuseteils 70 und Wellenelements 20 verringert werden. Eine hohe Passgenauigkeit hat aber darüber hinaus auch den Vorteil, dass der Bereich des zweiten Wellenendes ohne zusätzliche Dichtmittel abdichtbar ist.

Das Gehäuseteil 70 ist, wie in Figur 2 gut dargestellt, dazu ausgebildet das Wellenelement 20 und das Sensorelement 5 aufzunehmen. Das Gehäuseteil 70 ist in zwei Abschnitte 80, 90 einteilbar, wobei der erste Abschnitt dazu ausgebildet ist das Wellenelement 20 aufzunehmen und der zweite Abschnitt 90 im wesentlichen dazu ausgebildet ist das Sensorelement 5 aufzunehmen. Zwischen den zwei Abschnitten 80, 90 gibt es keinen Durchgang, so dass ein durchdringen von Feuchtigkeit vom ersten Abschnitt in den zweiten Abschnitt 80, 90 des Gehäuseteils 70 unmöglich ist. Im Gegenteil: durch eine Wand 85 wird der Hohlraum, der zum aufnehmen des Wellenelements 20 vorgesehen ist, vom zweiten Abschnitt 90 des Gehäuseteils 70 getrennt.

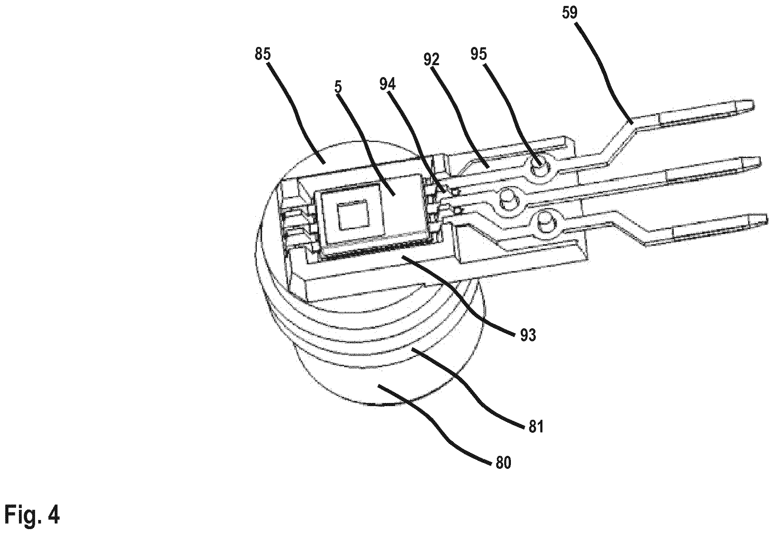

Der erste Abschnitt 80 des Gehäuseteils 70 weist eine zylinderförmige Grundform auf (s. Figur 4) . Die Außenfläche des ersten Abschnitts verläuft im Wesentlichen ebenförmig, wobei mehrere dreieckörmige Rippen 81 auf der äußeren Mantelfläche angeordnet sind. Diese Rippen 81 dienen dazu das Gehäuseteil 70 innerhalb des Gehäuses 7 zu verankern, wie in Figur 1 zu sehen. Darüber hinaus weist der erste Abschnitt eine Ausnehmung bzw. einen Hohlraum auf, in die das Wellenelement 20 aufgenommen wird. Die Formgebung des Hohlraums ist derart ausgebildet, um eine Lagerung des Wellenelements 20 zu ermöglichen, wie vorstehend beschrieben.

Der zweite Abschnitt 90 des Gehäuseteils 70 ist im Wesentlichen plattenförmig ausgebildet und an der Stirnseite des ersten Abschnitts bzw. an der Wand 85 angeordnet, die der Öffnung gegenüberliegt. Wie in den Figuren 2 und 3 zu sehen, ist die Oberseite 91 des zweiten Abschnitts im Wesentlichen ebenförmig ausgebildet. Die Unterseite 92 hingegen weist eine profilierte Struktur auf, um das Sensorelement 5 aufzunehmen. Es wird hierzu auf die Figur 4 verwiesen. Darin ist zu sehen, dass die Unterseite 92 eine Umrandung 93 aufweist, die eine Ausnehmung bildet, in die das Sensorelement 5 einlegbar ist. Ferner sind mehrere rippenförmige und stiftförmige Vorsprünge 94, 95 vorgesehen, so dass Leiterbahnen 59 des Sensorelements 5 exakt positionierbar sind und in der vorgesehenen Position gehalten werden. Die Unterseite 92 des zweiten Abschnitts 90 ist nach außen hin offen, so dass das Sensorelement 5 einfach in die Ausnehmung einlegbar ist. Das Gehäuseteil 70 wird samt des Sensorelements und des Wellenelements 20 umspritzt. Eine Abdeckung des Sensorelement 5 ist nicht notwendig.

Das Gehäuse 7 der Sensorvorrichtung 1 weist zum einen mehrere Befestigungsglieder 99 auf, wovon nur eines in Figur 1 exemplarisch gekennzeichnet ist, über die das Gehäuse 7 mittels Schrauben oder dergleichen an einem Kraftfahrzeug befestigbar sind. Des Weiteren weist das Gehäuse 7 eine ovalförmig ausgebildete Hülse 73 auf, die zum Aufnehmen einer Steckverbindung dient. In der Hülse 73 kann beispielsweise ein Stecker für eine Leiterplatine untergebracht sein, die mit den Leiterbahnen 59 des Sensorelements 5 verbunden sind. An diese Hülse 73 schließt sich ein das Gehäuseteil 70 umschließender Abschnitt 98 an. Dieser Abschnitt 98 umschließt das Gehäuseteil 70 nahezu vollständig bis auf einen Bereich, der vom Kragen 46 umfasst wird. Insbesondere wird auch der erste Abschnitt 80 des Gehäuseteils 70 von dem Gehäuse 7 umschlossen, insbesondere umspritzt. Auf diese Weise wird die Wand des ersten Abschnitts 80 des Gehäuseteils 70 an die Lagerabschnitte 24, 29 des Wellenelements 20 angedrückt. Auf diese Weise wird sichergestellt, dass der zweite Lagerabschnitt 24 unmittelbar an der Innenseite 74 des Gehäuseteils 70 anliegt.

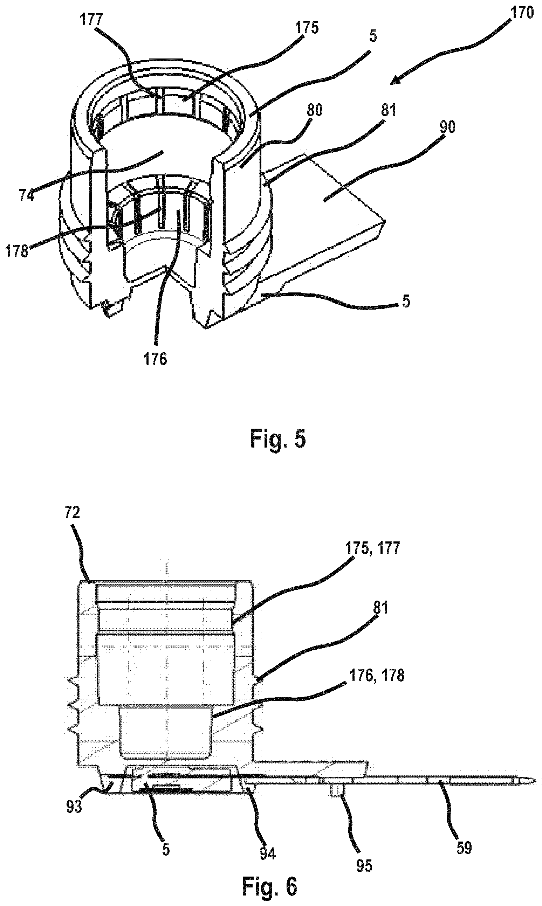

In den Figuren 5 und 6 ist ein zweites Ausführungsbeispiel dargestellt, das sich im Wesentlichen durch eine unterschiedliche Gestaltung der Innenseite 74 des Gehäuseteils 70 unterscheidet. Es wird daher im folgenden auf die vorgenannten Bezugszeichen zurückgegriffen, sofern es sich um identische Elemente handelt.

Das Gehäuseteil 170 gemäß dem zweiten Ausführungsbeispiel weist an der Innenseite 74 der Ausnehmung 176 mehrere segmentförmig ausgebildete Kontaktflächen 175, 176 auf, die mit dem ersten und zweiten Lagerabschnitt 24, 29 des Wellenelements 20 zusammenwirken. Im Bereich der Lagerabschnitte 24, 29 ist die Innenfläche 74 mittels Nuten 177, 178 in mehrere Kontaktflächensegmente 75, 76 unterteilt. Die Nuten 177, 178 verlaufen im wesentlichen parallel zu der Längsachse A des Wellenelements bzw. in vertikaler Richtung. Im Bereich des ersten Lagerabschnitts 24 ergeben sich dadurch entlang der Umfangsfläche umlaufend mehrere rechteckförmig ausgebildete Kontaktflächen 175, die die mittels der Nuten 177 unterbrochen werden. Im Bereich des zweiten Lagerabschnitts 29 verlaufen die Nuten korrespondierend zur Form der Sacklochbohrung bzw. stufenförmig, so dass die Kontaktflächen 176 auch hier voneinander getrennt sind. Die Tiefe der Nuten 177, 178 kann je nach Anwendungsfall variieren. Sie dienen zum einen als Schmiermittelreservoir. Des weiteren können diese Nuten auch dazu genutzt werden, um Schmutzpartikel oder dergleichen aufzunehmen. Insgesamt ergibt sich auf diese Weise eine geringere Reibung bei Rotation des Wellenelements 20 innerhalb des Gehäuseteils 71.

## Patentansprüche

1. Sensorvorrichtung (1) zum Erfassen einer Rotation aufweisend
- einen Positionsgeber (2) mit einem Wellenelement (20), das ein erstes und zweites Wellenende (22) aufweist, wobei über das erste Wellenende die zu erfassende Rotation eingeleitet wird, und wobei das Wellenelement an dem zweiten Wellenende (22) ein Magnetelement (51) enthält,
- ein Sensorelement (5) zum Erfassen der Rotation des Magnetelements, und
- ein in einem Gehäuse (7) integriertes Gehäuseteil (70) mit mindestens zwei voneinander getrennten Abschnitten (80, 90), das dazu ausgebildet ist, das Wellenelement (20) und das Sensorelement (5) aufzunehmen, wobei das Wellenelement (20) des Positionsgeber (2) am ersten Abschnitt (80) gelagert ist und das Sensorelement (5) im zweiten Abschnitt (90) angeordnet ist,
**dadurch gekennzeichnet, dass** das Gehäuseteil (70) und das Wellenelement (20) im Bereich des zweiten Wellenendes (22) jeweils einen sich zum Wellenende hin verjüngend geformten ersten Lagerabschnitt (29) aufweisen, an der das Wellenelement (20) am Gehäuseteil (70) anliegt, um den Positionsgeber am Gehäuseteil (70) zu lagern, wobei das Gehäuseteil (70) als ein vom Gehäuse (7) separates Teil ausgebildet ist, das durch Umspritzen mit dem Gehäuse verbindbar ist.

2. Sensorvorrichtung (1) nach Anspruch 1, **dadurch gekennzeichnet, dass** der erste Lagerabschnitt (29) stufenweise verjüngend geformt ist.

3. Sensorvorrichtung (1) nach Anspruch 1 oder 2, **dadurch gekennzeichnet, dass** der erste Lagerabschnitt (29) jeweils eine im Wesentlichen horizontal und eine im Wesentlichen vertikal verlaufende Kontaktfläche (29a, 29b) aufweist, die unmittelbar aneinander angrenzen.

4. Sensorvorrichtung (1) nach einem der vorstehenden An-sprüche, **dadurch gekennzeichnet, dass** das Gehäuseteil (70) und das Wellenelement (20) im Bereich des ersten Lagerabschnitts passgenau hergestellt ist.

5. Sensorvorrichtung (1) nach einem der vorstehenden An-sprüche, **dadurch gekennzeichnet, dass** die Position der horizontalen Kontaktflächen (29a) passgenau gefertigt ist.

6. Sensorvorrichtung (1) nach einem der vorstehenden An-sprüche, **dadurch gekennzeichnet, dass** das zweite Wel-lenende (22) nicht in Berührung mit dem Gehäuseteil (70) steht.

7. Sensorvorrichtung (1) nach einem der vorstehenden An-sprüche, **dadurch gekennzeichnet, dass** das Gehäuseteil (20) und das Wellenelement zwischen dem ersten Wellende und dem ersten Lagerabschnitt (29) jeweils einen zweiten Lagerabschnitt (24) zur radialen Lagerung des Wellenelements (20) aufweisen.

8. Sensorvorrichtung (1) nach dem vorstehenden Anspruch, **dadurch gekennzeichnet, dass** das Wellenelement (20) im zweiten Lagerabschnitt (24) ein Vorsprung mit einer im Wesentlichen parallel zur Längsachse des Wellenelements verlaufenden Kontaktfläche (26) zum Gehäuseteil (70) ausgebildet ist.

9. Sensorvorrichtung (1) nach einem der vorstehenden An-sprüche, **dadurch gekennzeichnet, dass** die Oberfläche des Gehäuseteils oder Wellenelements (20) zumindest im Bereich eines Lagerabschnitts (24, 29) ein Gleitmittel aufweist.

10. Sensorvorrichtung (1) nach einem der vorstehenden Ansprüche, **dadurch gekennzeichnet, dass** das Gehäuseteil (70) im Bereich mindestens eines Lagerabschnitts (24, 29) segmentförmig ausgebildete Kontaktflächen (176) aufweist, wobei die Kontaktflächen (176) mittels Nuten (178) voneinander getrennt sind.

11. Sensorvorrichtung (1) nach dem vorstehenden Anspruch, **dadurch gekennzeichnet, dass** die Nuten (178) zum Aufnehmen eines Schmiermittel vorgesehen ist.

12. Sensorvorrichtung (1) nach einem der Ansprüche 1-9, **dadurch gekennzeichnet, dass** die Passung im Bereich des ersten oder zweiten Lagerabschnitts (24, 29) derart gestaltet ist, den Bereich des zweiten Wellenendes (22) abzudichten.

13. Sensorvorrichtung (1) nach einem der vorstehenden Ansprüche, **dadurch gekennzeichnet, dass** das Sensorelement (5) einen Chip aufweist, wobei das Gehäuseteil (70) im zweiten Abschnitt (90) einen Ausnehmung zum Aufnehmen des Chips aufweist, wobei Position der Ausnehmung präzise zur Position des Wellenelements ausgerichtet ist.

14. Sensorvorrichtung (1) nach einem der vorstehenden Ansprüche, **dadurch gekennzeichnet, dass** der Positionsgeber (2) ein Hebelelement (40) aufweist, das am ersten Wellenende angeordnet ist und mit dem Wellenelement (20) einstückig ausgebildet ist, wobei im Bereich zwischen dem Wellenelement und dem Hebelelement eine Ausnehmung (46) ausgebildet ist, worüber der Positionsgeber in das Gehäuseteil (70) einrastbar ist.

15. Verwendung der Sensorvorrichtung (1) nach einem der vorstehenden Ansprüche als Höhenstandsensor.

## Claims

1. Sensor device (1) for sensing a rotation, having
- a position encoder (2) having a shaft element (20) which has a first and a second shaft end (22), wherein the rotation to be sensed is introduced via the first shaft end, and wherein the shaft element contains a magnet element (51) at the second shaft end (22),
- a sensor element (5) for sensing the rotation of the magnet element, and
- a housing part (70), integrated into a housing (7), having at least two portions (80, 90) that are separated from one another, said housing part being configured to receive the shaft element (20) and the sensor element (5), wherein the shaft element (20) of the position encoder (2) is mounted on the first portion (80) and the sensor element (5) is arranged in the second portion (90),
**characterized in that** the housing part (70) and the shaft element (20) each have, in the region of the second shaft end (22), a first bearing portion (29) which is shaped in a manner narrowing toward the shaft end and at which the shaft element (20) bears on the housing part (70) in order to mount the position encoder on the housing part (70), wherein the housing part (70) is configured as a part that is separate from the housing (7) and can be connected to the housing by overmoulding.

2. Sensor device (1) according to Claim 1, **characterized in that** the first bearing portion (29) is shaped in a manner narrowing in a stepped manner.

3. Sensor device (1) according to Claim 1 or 2, **characterized in that** the first bearing portion (29) has a substantially horizontally extending contact face (29a) and a substantially vertically extending contact face (29b), which immediately adjoin one another.

4. Sensor device (1) according to one of the preceding claims, **characterized in that** the housing part (70) and the shaft element (20) are produced with a precise fit in the region of the first bearing portion.

5. Sensor device (1) according to one of the preceding claims, **characterized in that** the position of the horizontal contact faces (29a) is produced with a precise fit.

6. Sensor device (1) according to one of the preceding claims, **characterized in that** the second shaft end (22) is not in contact with the housing part (70).

7. Sensor device (1) according to one of the preceding claims, **characterized in that** the housing part (20) and the shaft element each have, between the first shaft end and the first bearing portion (29), a second bearing portion (24) for radially mounting the shaft element (20) .

8. Sensor device (1) according to the preceding claim, **characterized in that** the shaft element (20) is formed, in the second bearing portion (24), with a protrusion having a contact face (26), extending substantially parallel to the longitudinal axis of the shaft element, with respect to the housing part (70).

9. Sensor device (1) according to one of the preceding claims, **characterized in that** the surface of the housing part or shaft element (20) has a lubricant at least in the region of one bearing portion (24, 29).

10. Sensor device (1) according to one of the preceding claims, **characterized in that** the housing part (70) has contact faces (176) formed in a segmented manner in the region of at least one bearing portion (24, 29), wherein the contact faces (176) are separated from one another by means of grooves (178).

11. Sensor device (1) according to the preceding claim, **characterized in that** the grooves (178) are provided to receive a lubricant.

12. Sensor device (1) according to one of Claims 1-9, **characterized in that** the fit in the region of the first or second bearing portion (24, 29) is designed so as to seal off the region of the second shaft end (22).

13. Sensor device (1) according to one of the preceding claims, **characterized in that** the sensor element (5) has a chip, wherein the housing part (70) has, in the second portion (90), a recess for receiving the chip, wherein the position of the recess is aligned precisely with the position of the shaft element.

14. Sensor device (1) according to one of the preceding claims, **characterized in that** the position encoder (2) has a lever element (40) which is arranged at the first shaft end and is formed integrally with the shaft element (20), wherein, in the region between the shaft element and the lever element, a recess (46) is formed, via which the position encoder is able to be latched in place in the housing part (70).

15. Use of the sensor device (1) according to one of the preceding claims as a ride-height sensor.

## Revendications

1. Dispositif capteur (1) destiné à détecter une rotation, comportant
- un capteur de position (2) muni d'un élément arbre (20) qui présente une première et une deuxième extrémité d'arbre (22), dans lequel la rotation à détecter est déclenchée par la première extrémité d'arbre, et dans lequel l'élément arbre contient un élément magnétique (51) à la deuxième extrémité d'arbre (22),
- un élément capteur (5) servant à détecter la rotation de l'élément magnétique, et
- une partie de boîtier (70) intégrée dans un boîtier (7) et munie d'au moins deux sections (80, 90) séparées l'une de l'autre, qui est conçue pour recevoir l'élément arbre (20) et l'élément capteur (5), dans lequel l'élément arbre (20) du capteur de position (2) est monté sur la première section (80) et l'élément capteur (5) est disposé dans la deuxième section (90),
**caractérisé en ce que** la partie de boîtier (70) et l'élément arbre (20) présentent respectivement dans la région de la deuxième extrémité d'arbre (22) une première section de support (29) qui est formée de manière conique vers l'extrémité d'arbre et au niveau de laquelle l'élément arbre (20) est en appui sur la partie de boîtier (70) pour supporter le capteur de position au niveau de la partie de boîtier (70), la partie de boîtier (70) étant réalisée sous la forme d'une partie séparée du boîtier (7) et pouvant être reliée au boîtier par encapsulation.

2. Dispositif capteur (1) selon la revendication 1, **caractérisé en ce que** la première section de palier (29) est formée de manière conique par paliers.

3. Dispositif capteur (1) selon la revendication 1 ou 2, **caractérisé en ce que** la première section de palier (29) présente des surfaces de contact (29a, 29b) s'étendant respectivement sensiblement horizontalement et sensiblement verticalement, qui sont directement adjacentes l'une à l'autre.

4. Dispositif capteur (1) selon l'une des revendications précédentes, **caractérisé en ce que** la partie de boîtier (70) et l'élément arbre (20) sont réalisés de manière à s'ajuster précisément dans la zone de la première section de palier.

5. Dispositif de détection (1) selon l'une des revendications précédentes, **caractérisé en ce que** la position des surfaces de contact horizontales (29a) est ajustée de manière précise.

6. Dispositif capteur (1) selon l'une des revendications précédentes, **caractérisé en ce que** la deuxième extrémité d'arbre (22) n'est pas en contact avec la partie de boîtier (70).

7. Dispositif capteur (1) selon l'une des revendications précédentes, **caractérisé en ce que** la partie de boîtier (20) et l'élément arbre présentent respectivement une deuxième section de support (24) entre la première extrémité d'arbre et la première section de support (29) pour supporter radialement l'élément arbre (20) .

8. Dispositif capteur (1) selon la revendication précédente, **caractérisé en ce que** l'élément arbre (20) est réalisé dans la deuxième section de support (24) sous la forme d'une protubérance munie d'une surface de contact (26) s'étendant sensiblement parallèlement à l'axe longitudinal de l'élément arbre vers la partie de boîtier (70).

9. Dispositif capteur (1) selon l'une des revendications précédentes, **caractérisé en ce que** la surface de la partie de boîtier ou de l'élément arbre (20) comporte un moyen de glissement au moins dans la région d'une section de support (24, 29).

10. Dispositif capteur (1) selon l'une des revendications précédentes, **caractérisé en ce que** la partie de boîtier (70) présente des surfaces de contact (176) réalisées sous la forme de segments dans la région d'au moins une section de support (24, 29), dans lequel les surfaces de contact (176) sont séparées les unes des autres au moyen de gorges (178).

11. Dispositif capteur (1) selon la revendication précédente, **caractérisé en ce que** les gorges (178) sont prévues pour recevoir un lubrifiant.

12. Dispositif capteur (1) selon l'une des revendications 1-9, **caractérisé en ce que** l'ajustement dans la région de la première ou deuxième section de support (24, 29) est conçu pour rendre étanche la région de la deuxième extrémité d'arbre (22).

13. Dispositif capteur (1) selon l'une des revendications précédentes, **caractérisé en ce que** l'élément capteur (5) comporte une puce, dans lequel la partie de boîtier (70) présente dans la deuxième section (90) un évidement destiné à recevoir la puce, dans lequel la position de l'évidement est exactement orientée vers la position de l'élément arbre.

14. Dispositif capteur (1) selon l'une des revendications précédentes, **caractérisé en ce que** le capteur de position (2) comporte un élément levier (40) disposé à la première extrémité d'arbre et qui réalisé solidaire de l'élément arbre (20), dans lequel un évidement (46) est formé dans la région située entre l'élément arbre et l'élément levier, par l'intermédiaire duquel le capteur de position peut être enclenché dans la partie de boîtier (70).

15. Utilisation du dispositif capteur (1) selon l'une des revendications précédentes en tant que capteur de niveau de remplissage.
